# EUROPÄISCHE PATENTANMELDUNG

(11) **EP 4 641 042 A1**
(43) Veröffentlichungstag der Anmeldung: **29.10.2025**
(21) Anmeldenummer: 25154314.6
(22) Anmeldetag: 28.01.2025
(51) Int. Cl.: F16D 65/00

(54) **SCHEIBENBREMSE MIT EINER PARTIKELABSAUGUNG, SOWIE ABSAUGSYSTEM FÜR EINE SCHEIBENBREMSE**

(30) Priorität: 29.02.2024 DE 102024105794
(71) Anmelder: ZF CV Systems Europe BV, 1170 Brüssel (BE)
(72) Erfinder: HECKER, Jannis, 68723 Plankstadt (DE); HENNING, Paul, 68723 Schwetzingen (DE)
(74) Vertreter: Rabe, Dirk-Heinrich

(57) **Zusammenfassung**

Eine Scheibenbremse (1) für ein Kraftfahrzeug weist eine Bremsscheibe und einen Bremssattel (4) auf, in dem zwei Bremsbeläge und ein Mechanismus zur Betätigung der Bremsbeläge angeordnet sind, sowie eine Umhüllung (12), die die Bremsscheibe bereichsweise umfasst. Die Umhüllung (12) weist hierbei einen Sauganschluss () für eine Partikelabsaugung auf. An dem Sauganschluss der Umhüllung (12) ist in einem Ausführungsbeispiel eine druckluftbetriebene Saugvorrichtung (18) befestigt.

## Beschreibung

Die Erfindung betrifft eine Scheibenbremse mit einer Partikelabsaugung für ein Kraftfahrzeug sowie ein Absaugsystem für mindestens eine Scheibenbremse eines Kraftfahrzeugs.

Scheibenbremsen in Kraftfahrzeugen weisen Bremsbeläge auf, die in Abhängigkeit einer Betätigung eines Bremswertgebers von einem Aktuator auf eine mit einem abzubremsenden Rad verbundene Bremsscheibe gedrückt werden, um eine Bremswirkung auf die Bremsscheibe und hierdurch auf das Rad übertragen zu können. Wird das Kraftfahrzeug gebremst, so entsteht durch den Bremsvorgang in der Scheibenbremse ein Partikelabrieb in der Form von Bremsstaub, der schädlich für die Umwelt ist.

Aus der EP 4 283 155 A1 ist eine Luftführungsanordnung für eine Scheibenbremse eines Fahrzeugs offenbart, wobei die Luftführungsanordnung ein Strukturelement, das eine Bremsscheibe der Scheibenbremse bereichsweise umfasst, sowie einen Lufteinlass, durch den Luft in das Strukturelement geführt wird, aufweist. In dem Strukturelement ist ein Filter angeordnet, das Bremsstaub absorbiert, der während eines Bremsprozesses in der Scheibenbremse entsteht.

Es ist eine Aufgabe der Erfindung, eine Scheibenbremse für ein Kraftfahrzeug sowie ein Absaugsystem für mindestens eine Scheibenbremse eines Kraftfahrzeugs anzugeben, durch die eine Belastung für die Umwelt durch während eines Bremsvorgangs entstehenden Bremsstaub reduziert wird.

Diese Aufgabe wird durch eine Scheibenbremse gemäß Anspruch 1 und durch ein Absaugsystem gemäß Anspruch 8 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft eine Scheibenbremse für ein Kraftfahrzeug, die eine Bremsscheibe und einen Bremssattel, in dem zwei Bremsbeläge sowie ein Mechanismus zur Betätigung der Bremsbeläge angeordnet sind, aufweist. Die Scheibenbremse weist weiterhin eine Umhüllung auf, die einen Sauganschluss für eine Partikelabsaugung aufweist, wobei die Umhüllung die Bremsscheibe bereichsweise umfasst.

In einem vorteilhaften Ausführungsbeispiel weist die Bremsscheibe einen Bremsscheibentopf und einen Reibring auf, der mit dem Bremsscheibentopf fest verbunden ist. Der Bremssattel und die Umhüllung umgeben hierbei den Reibring vollständig, mit Ausnahme von einem Luftspalt, der zwischen der Umhüllung und dem Reibring verbleibt.

In einem weiteren vorteilhaften Ausführungsbeispiel ist an dem Sauganschluss der Umhüllung eine druckluftbetriebene Saugvorrichtung befestigt.

In einem weiteren vorteilhaften Ausführungsbeispiel ist die Saugvorrichtung ein Vakuum-Erzeuger, dessen Funktionsweise auf einem Coandä-Effekt beruht.

In einem weiteren vorteilhaften Ausführungsbeispiel ist die Saugvorrichtung ein Vakuum-Erzeuger, dessen Funktionsweise auf einem Venturi-Effekt beruht.

In einem weiteren vorteilhaften Ausführungsbeispiel weist die Umhüllung einen Staubbehälter auf, in dem ein Filter, insbesondere ein Luftfilter, angeordnet ist.

In einem weiteren vorteilhaften Ausführungsbeispiel ist der Sauganschluss für die Partikelabsaugung an dem Staubbehälter angeordnet.

Die Erfindung betrifft weiterhin ein Absaugsystem für mindestens eine Scheibenbremse eines Kraftfahrzeugs, wobei das Absaugsystem eine Saugvorrichtung aufweist, die einen Druckluftanschluss für eine Verbindung mit einem Druckluftsystem des Kraftfahrzeugs enthält, sowie einen Saugeingang und eine Verbindungsleitung für eine Verbindung mit dem Sauganschluss der Umhüllung der Scheibenbremse enthält.

In einer bevorzugten Ausführungsform weist das Absaugsystem Verbindungsleitungen zu allen Scheibenbremsen des Kraftfahrzeugs auf für eine Partikelabsaugung der Scheibenbremsen, wobei alle Scheibenbremsen eine Umhüllung mit einem Sauganschluss aufweisen und jeder Sauganschluss der Umhüllungen mit der druckluftbetriebenen Saugvorrichtung über eine diesbezügliche Verbindungsleitung verbunden ist.

In einer weiteren bevorzugten Ausführungsform weist das Absaugsystem eine Partikelabsaugung mit nur einer druckluftbetriebenen Saugvorrichtung auf.

In einer weiteren bevorzugten Ausführungsform weist das Absaugsystem ein oder mehrere zentral in dem Kraftfahrzeug angeordnete Filter, insbesondere Luftfilter, auf.

In einer weiteren bevorzugten Ausführungsform ist das Kraftfahrzeug ein Nutzfahrzeug, das ein Druckluftsystem aufweist, wobei das Absaugsystem Verbindungsleitungen zu allen Scheibenbremsen des Kraftfahrzeugs aufweist für eine Partikelabsaugung der Scheibenbremsen.

Ausführungsbeispiele der Erfindung sind in den Zeichnungen schematisch dargestellt und werden nachfolgend anhand der Figuren näher erläutert.

Es zeigen:
- Fig. 1: eine Scheibenbremse für ein Kraftfahrzeug, die eine Umhüllung aufweist, die eine Bremsscheibe der Scheibenbremse bereichsweise umfasst, wobei an der Umhüllung ein Staubbehälter mit einem Luftfilter und einer Saugvorrichtung befestigt ist;
- Fig. 2: eine Saugvorrichtung, deren Funktionsweise auf einem Coandä-Effekt beruht;
- Fig. 3: eine Saugvorrichtung, deren Funktionsweise auf einem Venturi-Effekt beruht, und
- Fig. 4: ein zweites Ausführungsbeispiel einer Scheibenbremse für ein Kraftfahrzeug, wobei an einer Umhüllung der Scheibenbremse ein Staubbehälter mit einem Luftfilter und einem Sauganschluss für eine Partikelabsaugung befestigt ist.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

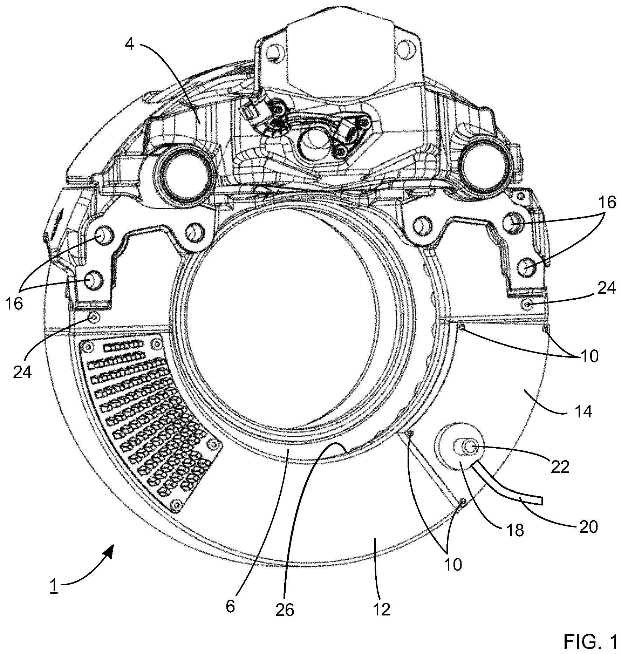

In der Fig. 1 ist schematisch eine Scheibenbremse 1 für ein Kraftfahrzeug dargestellt, die eine Bremsscheibe und einen Bremssattel 4 umfasst. In dem Bremssattel 4 sind zwei Bremsbeläge sowie ein Mechanismus zur Betätigung der Bremsbeläge, in der Fig. 1 nicht dargestellt, angeordnet. Die Bremsscheibe weist einen Bremsscheibentopf 6 auf sowie einen Reibring, in der Fig. 1 nicht sichtbar, der mit dem Bremsscheibentopf 6 fest verbunden ist.

In diesem Ausführungsbeispiel ist der Bremssattel 4 über der Bremsscheibe positioniert und der untere Teil des Reibrings ist mit einer Umhüllung 12 umgeben, an der ein Staubbehälter 14 mit einem Filter, insbesondere einem Luftfilter, befestigt ist. Der Luftfilter, in der Fig. 1 nicht dargestellt, füllt insbesondere den Raum des Staubbehälters 14 vollständig aus. Der Staubbehälter 14 ist vorzugsweise mit der Umhüllung 12 verschraubt, hier mittels Schrauben 10, so dass der Luftfilter bei Bedarf gewechselt werden kann. Der Bremssattel 4 weist Löcher 16 auf, durch die die Scheibenbremse 1 an einer Achse des Kraftfahrzeugs befestigt werden kann. Die Umhüllung 12 ist in diesem Ausführungsbeispiel mittels Schrauben 24 mit dem Bremssattel 4 verschraubt.

An dem Staubbehälter 14 ist eine Saugvorrichtung 18 für eine Luftabsaugung angeordnet. Die Saugvorrichtung 18 weist einen Saugeingang, einen Druckluftanschluss 20 und einen Ausgang 22 auf. Der Staubbehälter 14 weist hierbei einen Sauganschluss auf, wobei der Saugeingang der Saugvorrichtung 18 mit dem Sauganschluss des Staubbehälters 14 gekoppelt ist, in der Fig. 1 nicht sichtbar.

Der Reibring der Bremsscheibe ist hierbei durch den Bremssattel 4, die Umhüllung 12 und den Staubbehälter 14 fast vollständig gekapselt, so dass durch einen Bremsvorgang in der Scheibenbremse 1 entstehender Bremsstaub der Bremsbeläge und des Reibrings über die Saugvorrichtung 18 angesaugt und in dem Luftfilter abgeschieden werden kann. Der Luftfilter ist hierbei durchlässig für die angesaugte Luft, aber absorbiert den Bremsstaub sowie sonstige Partikel. In dem Ausführungsbeispiel der Fig. 1 ist der Luftfilter vor der Saugvorrichtung 18 angeordnet, so dass ein staubfreier Betrieb der Saugvorrichtung 18 gegeben ist.

Die Umhüllung 12 umgibt den Reibring hierbei fast vollständig derart, dass ein Luftspalt 26 zwischen der Umhüllung 12 und dem Reibring verbleibt, so dass die Umhüllung 12 den Reibring nicht berührt. Hierdurch wird eine Reibung zwischen der Umhüllung 12 und dem Reibring vermieden. Außerdem tritt über den Luftspalt 26 Umgebungsluft in die Umhüllung 12 ein, die anschließend beim Betrieb der Luftabsaugung den bei einem Bremsvorgang entstehenden Bremsstaub mitreißt.

Die Scheibenbremse 1 ist beispielsweise eine druckluftbetriebene Scheibenbremse für ein Nutzfahrzeug, und die Saugvorrichtung 18 ist insbesondere eine mit Druckluft betriebene Saugvorrichtung. Druckluftbetriebene Saugvorrichtungen weisen keine beweglichen Teile auf und können sehr kompakt hergestellt werden, so dass eine Saugvorrichtung dieser Art beispielsweise direkt an dem Staubbehälter 14 befestigt werden kann.

Druckluftbetriebene Saugvorrichtungen sind beispielsweise als Venturi-Sauger oder Coandä-Sauger bekannt. In Nutzfahrzeugen ist üblicherweise bereits ein Druckluftsystem vorhanden, insbesondere für den Betrieb von Scheibenbremsen des Nutzfahrzeugs, so dass die druckluftbetriebene Saugvorrichtung über eine Verbindungsleitung, die an einem Druckluftanschluss der Saugvorrichtung angeschlossen ist, von dem Druckluftsystem betrieben werden kann. Für den Betrieb der Saugvorrichtung kann beispielsweise auch ein Druckminderer oder eine andere Vorrichtung zur Druckluftregelung zwischen dem Druckluftsystem und der Saugvorrichtung eingeordnet sein.

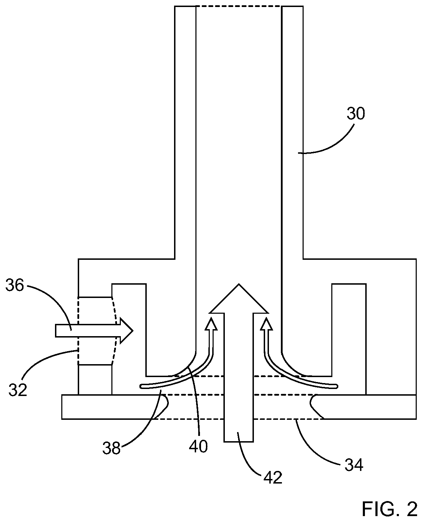

In der Fig. 2 ist schematisch in einem Querschnitt eine Saugvorrichtung 30 dargestellt, deren Funktionsweise auf einem Coandä-Effekt beruht. Die Saugvorrichtung 30 besitzt einen Druckluftanschluss 32, der mit dem Druckluftsystem des Nutzfahrzeugs über eine Verbindungsleitung, in der Fig. 2 nicht dargestellt, gekoppelt ist, sowie einen Saugeingang 34. Der Saugeingang 34 ist beispielsweise über eine Verbindungsleitung mit dem Sauganschluss der Umhüllung 12 der Fig. 1 verbunden. Alternativ ist die Saugvorrichtung 30 direkt an dem Sauganschluss der Umhüllung 12 angeordnet, wie in der Fig. 1 dargestellt.

Der Coandä-Effekt beschreibt eine Anheftung einer Strömung an eine gekrümmte Oberfläche. In der Saugvorrichtung 30 wird Druckluft 36 durch einen Ringspalt 38 geführt und somit beschleunigt. Hierdurch wird die Fließgeschwindigkeit der Druckluft 36 in der Saugvorrichtung 30 erhöht, wobei die aus dem Ringspalt 38 austretende Druckluft 36 einer konvexen Oberfläche 40 der Saugvorrichtung 30 folgt. Dies hat zur Folge, dass die in der Saugvorrichtung 30 vorhandene Umgebungsluft mitgerissen wird. Hierdurch wird eine Luftmasse 42 über den Saugeingang 34 angesaugt, so dass die innerhalb der Umhüllung 12 der Scheibenbremse 1 vorhandene Luft zusammen mit dem bei einem Bremsvorgang erzeugten Bremsstaub abgesaugt wird.

Der durch die Saugvorrichtung 30 erzeugte Sekundär-Volumenstrom durch den Saugeingang 34, d.h. die angesaugte Luftmasse 42, kann beispielsweise je nach Ausführung und Anwendung der Saugvorrichtung 30 bis zu zehnmal grösser sein als der Primär-Volumenstrom durch den Druckluftanschluss 32, d.h. die zugeführte Druckluft 36.

Saugvorrichtungen, die den Coandä-Effekt verwenden, werden in der Industrie beispielsweise als Strömungsgreifer verwendet. Ein Strömungsgreifer kann beispielsweise ein Vakuum von 25 bis über 150 mbar erreichen, wenn der Strömungsgreifer bei einem Betriebsdruck in einem Bereich von 1 bis 5 bar betrieben wird. In dem Bereich von 1 bis 5 bar kann hierbei mit dem Strömungsgreifer ein Saugvermögen von etwa 270 bis 650 l/min erreicht werden, bei einem Luftverbrauch von 60 bis 200 l/min.

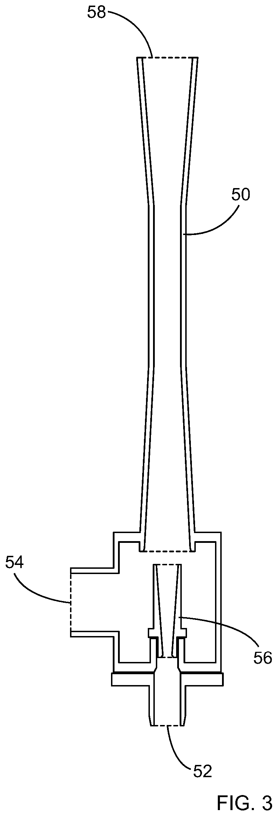

In der Fig. 3 ist schematisch in einem Querschnitt eine Saugvorrichtung 50 dargestellt, deren Funktionsweise auf einem Venturi-Effekt beruht. Die Saugvorrichtung 50 besitzt einen Druckluftanschluss 52, der beispielsweise mit dem Druckluftsystem des Nutzfahrzeugs über eine Verbindungsleitung, in der Fig. 3 nicht dargestellt, gekoppelt ist, sowie einen Saugeingang 54, der über eine Verbindungsleitung mit dem Sauganschluss der Umhüllung 12 der Fig. 1 verbunden ist. Alternativ ist die Saugvorrichtung 50 direkt an dem Sauganschluss der Umhüllung 12 angeordnet.

Der Venturi-Effekt funktioniert wie folgt: Bei der Saugvorrichtung 50 wird an dem Druckluftanschluss 52 eintretende Druckluft in einer Treibdüse 56 der Saugvorrichtung 50, einer sogenannten Venturi-Düse, beschleunigt. Nach dem Passieren der Treibdüse 56 entspannt sich die beschleunigte Luft und ein Vakuum entsteht. Durch das entstehende Vakuum wird Luft über den Saugeingang 54 angesaugt, die anschließend zusammen mit der Druckluft über einen Ausgang 58 aus der Saugvorrichtung 50 austritt.

Saugvorrichtungen nach dem Venturi-Effekt können ebenfalls als Strömungsgreifer verwendet werden, wobei mit diesen Saugvorrichtungen größere Unterdrücke erreicht werden können als mit Saugvorrichtungen nach dem Coandä-Effekt. Bei einer Saugvorrichtung nach dem Venturi-Effekt wird jedoch ein höherer Primär-Volumenstrom benötigt, als Sekundär-Volumenstrom erzeugt wird. Dies kann jedoch durch einen mehrstufigen Aufbau der Saugvorrichtung kompensiert werden.

Sowohl Coandä-Saugvorrichtungen als auch Venturi-Saugvorrichtungen haben im Normalfall keine beweglichen Bauteile, was sie stoßresistent macht. Hierdurch sind sie für eine Verwendung an einem ungefederten Radende besonders geeignet.

In einer anderen Ausführungsform der Erfindung besitzt ein Nutzfahrzeug mehrere Scheibenbremsen und ein Absaugsystem mit einer druckluftbetriebenen Partikelabsaugung, das mindestens eine mit Druckluft betriebene Saugvorrichtung der vorangehend beschriebenen Art aufweist. Die Partikelabsaugung ist hierbei vorzugsweise zentral in dem Nutzfahrzeug angeordnet. Nutzfahrzeuge weisen üblicherweise ein Druckluftsystem für den Betrieb der Scheibenbremsen auf, so dass dieses für den Betrieb der Saugvorrichtung verwendet werden kann.

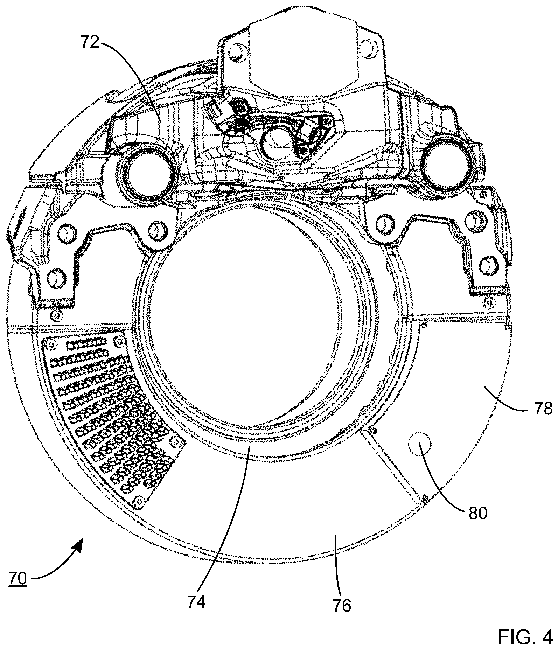

Eine Scheibenbremse 70 für diese Anwendung ist in der Fig. 4 schematisch dargestellt. Die Scheibenbremse 70 umfasst einen Bremssattel 72 und eine Bremsscheibe mit einem Reibring und einem Bremsscheibentopf 74 und entspricht in diesem Ausführungsbeispiel im Wesentlichen der Scheibenbremse 1 der Fig 1. Der untere Teil des Reibrings ist mit einer Umhüllung 76 umgeben, an der ein Staubbehälter 78 mit einem Filter, insbesondere einem Luftfilter, befestigt ist. An dem Staubbehälter 78 ist diesem Ausführungsbeispiel ein Sauganschluss 80 angeordnet, an dem eine Verbindungsleitung für eine Luftabsaugung angeschlossen werden kann.

Vorzugsweise alle Scheibenbremsen des Nutzfahrzeugs weisen hierbei jeweils eine Umhüllung mit einem derartigen Sauganschluss auf, wobei jeder Sauganschluss der Umhüllungen mit der druckluftbetriebenen Saugvorrichtung über eine Verbindungsleitung verbunden ist. Beispielsweise kann das Absaugsystem eine Partikelabsaugung mit nur einer druckluftbetriebenen Saugvorrichtung für alle Scheibenbremsen aufweisen, wobei die Saugvorrichtung einen Saugeingang aufweist, der über entsprechende Verbindungsleitungen mit den Sauganschlüssen der Umhüllungen verbunden ist.

Vorzugsweise können hier auch ein oder mehrere Luftfilter zentral in dem Nutzfahrzeug angeordnet sein, anstatt jede Scheibenbremse mit einem Luftfilter auszurüsten, wie anhand der Fig. 4 beschrieben. Der Luftfilter kann beispielsweise an einem gut zugänglichen Ort in dem Nutzfahrzeug angeordnet sein, so dass ein Filterwechsel schnell, ohne einen größeren Aufwand, durchgeführt werden kann.

Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste (Teil der Beschreibung)

- 1: Scheibenbremse
- 4: Bremssattel
- 6: Bremsscheibentopf
- 10: Schrauben
- 12: Umhüllung
- 14: Staubbehälter
- 16: Löcher
- 18: Saugvorrichtung
- 20: Druckluftanschluss
- 22: Ausgang
- 24: Schrauben
- 26: Luftspalt
- 30: Saugvorrichtung
- 32: Druckluftanschluss
- 34: Saugeingang
- 36: Druckluft
- 38: Ringspalt
- 40: Konvexe Oberfläche
- 42: Luftmasse
- 50: Saugvorrichtung
- 52: Druckluftanschluss
- 54: Saugeingang
- 56: Treibdüse
- 58: Ausgang
- 70: Scheibenbremse
- 72: Bremssattel
- 74: Bremsscheibentopf
- 76: Umhüllung
- 78: Staubbehälter
- 80: Sauganschluss

## Patentansprüche

1. Scheibenbremse (1, 70) für ein Kraftfahrzeug mit einer Bremsscheibe und einem Bremssattel (4), in dem zwei Bremsbeläge sowie ein Mechanismus zur Betätigung der Bremsbeläge angeordnet sind, wobei die Scheibenbremse (1, 70) eine Umhüllung (12, 76) aufweist, die die Bremsscheibe bereichsweise umfasst, **dadurch gekennzeichnet, dass** die Umhüllung (12, 76) einen Sauganschluss (80) für eine Partikelabsaugung aufweist.

2. Scheibenbremse (1, 70) nach Anspruch 1, wobei die Bremsscheibe einen Bremsscheibentopf (6) und einen Reibring aufweist, der mit dem Bremsscheibentopf (6) fest verbunden ist, und wobei der Bremssattel (4) und die Umhüllung (12, 76) den Reibring vollständig umgeben, mit Ausnahme von einem Luftspalt (26), der zwischen der Umhüllung (12, 76) und dem Reibring verbleibt.

3. Scheibenbremse (1) nach Anspruch 1 oder 2, wobei an dem Sauganschluss der Umhüllung (12) eine druckluftbetriebene Saugvorrichtung (18, 30, 50) befestigt ist.

4. Scheibenbremse (1) nach Anspruch 3, wobei die Saugvorrichtung (18, 30) ein Vakuum-Erzeuger ist, dessen Funktionsweise auf einem Coandä-Effekt beruht.

5. Scheibenbremse (1) nach Anspruch 3, wobei die Saugvorrichtung (18, 50) ein Vakuum-Erzeuger ist, dessen Funktionsweise auf einem Venturi-Effekt beruht.

6. Scheibenbremse (1, 70) nach einem der vorangehenden Ansprüche, wobei die Umhüllung (12, 76) einen Staubbehälter (14, 78) aufweist, in dem ein Filter, insbesondere ein Luftfilter, angeordnet ist.

7. Scheibenbremse (1, 70) nach Anspruch 6, wobei der Sauganschluss (80) für die Partikelabsaugung an dem Staubbehälter (14, 78) angeordnet ist.

8. Absaugsystem nach Anspruch 1 oder 2 für mindestens eine Scheibenbremse (70) eines Kraftfahrzeugs, **dadurch gekennzeichnet, dass** das Absaugsystem eine Saugvorrichtung (30; 50) aufweist, die einen Druckluftanschluss (32; 52) für eine Verbindung mit einem Druckluftsystem des Kraftfahrzeugs aufweist, sowie einen Saugeingang (34; 54) und eine Verbindungsleitung für eine Verbindung mit dem Sauganschluss (80) der Umhüllung (76) der Scheibenbremse (70).

9. Absaugsystem nach Anspruch 8, wobei das Absaugsystem Verbindungsleitungen zu allen Scheibenbremsen (70) des Kraftfahrzeugs aufweist für eine Partikelabsaugung der Scheibenbremsen (70), alle Scheibenbremsen (70) eine Umhüllung (76) mit einem Sauganschluss (80) aufweisen und jeder Sauganschluss (80) der Umhüllungen (76) mit der druckluftbetriebenen Saugvorrichtung (30; 50) über eine diesbezügliche Verbindungsleitung verbunden ist.

10. Absaugsystem nach Anspruch 8 oder 9, wobei die Saugvorrichtung (30; 50) eine druckluftbetriebene Saugvorrichtung ist, deren Funktionsweise auf dem Coandä-Effekt oder dem Venturi-Effekt beruht.

11. Absaugsystem nach Anspruch 8, 9 oder 10, wobei das Absaugsystem eine Partikelabsaugung mit nur einer druckluftbetriebenen Saugvorrichtung (30; 50) aufweist.

12. Absaugsystem nach einem der Ansprüche 8 bis 11, wobei das Absaugsystem ein oder mehrere zentral in dem Kraftfahrzeug angeordnete Filter, insbesondere Luftfilter, aufweist.

13. Absaugsystem nach einem der Ansprüche 8 bis 12, wobei das Kraftfahrzeug ein Nutzfahrzeug mit einem Druckluftsystem ist.
